# DEMANDE DE BREVET EUROPEEN

(11) **EP 1 050 764 A2**
(43) Date de publication de la demande: **08.11.2000**
(21) Numéro de dépôt: 00810370.7
(22) Date de dépôt: 01.05.2000
(51) Int. Cl.: G01V 1/00, G01N 3/32

(54) **Procédé et dispositif de mesure de modules d'élasticité dynamique d'un terrain**

(30) Priorité: 04.05.1999 CH 81799
(71) Demandeur: Treyvaud, René, 1328 Mont-la-Ville (CH)
(72) Inventeur: Treyvaud, René, 1328 Mont-la-Ville (CH)

(57) **Abrégé**

Le dispositif permettant l'application du procédé comprend essentiellement un générateur de vibrations constitué de deux masselottes excentriques tournant en sens inverse, d'un géophone capable de détecter les vibrations induites dans le sol par le générateur à une certaine distance de celui-ci, d'un amplificateur et d'un redresseur synchronisé avec le générateur.

La tension obtenue à la sortie du redresseur est, lorsque la fréquence d'émission du générateur est assez basse, inversément proportionnelle au module d'élasticité du terrain pour une distance émetteur-récepteur donnée.

## Description

Lorsqu'on désire connaître les qualités physiques d'un terrain sans y faire de carottages, on utilise des méthodes indirectes. On peut, depuis la surface, mesurer la résistivité du sous-sol en y injectant du courant électrique par deux électrodes et en mesurant la différence de potentiel produite entre deux autres électrodes. On peut également frapper le sol et mesurer la vitesse des ondes mécaniques produites et captées au moyen de géophones. Cette dernière méthode nous renseigne sur la célérité du sous-sol, c'est à dire sur la vitesse à laquelle les ondes sismiques le traversent.

La célérité d'un matériau dépend de sa densité et de son module d'élasticité. On peut donc déterminer le module d'élasticité d'un terrain en mesurant sa célérité et sa densité. Or il est difficile de mesurer la densité d'un terrain sans y faire des prélèvements. De plus, on ne peut mesurer la célérité des couches du sous-sol que si cette célérité va en augmentant avec la profondeur.

Le présent procédé permet de mesurer directement le module d'élasticité dynamique moyen du sous-sol depuis la surface sans être arrêté par les limitations précitées.

Une tentative a été faite dans ce sens en créant des vibrations mécaniques au moyen d'un vibrateur semblable à un haut parleur et en comparant l'amplitude et la phase du signal reçu par un géophone au courant d'excitation du vibrateur au moyen d'un Wattmètre dont une bobine était parcourue par le courant d'excitation et l'autre par le courant de réception.

L'amplitude de l'excitation mécanique étant limitée, on était appelé, pour obtenir des signaux suffisants à la réception, à utiliser des fréquences relativement élevées de 50 à 2,000 Hz. environ. Le dispositif étant fixé, on faisait varier la fréquence du signal émis. En reportant en coordonnées polaires les résultats des mesures, on obtenait un diagramme connu sous le nom de diagramme de Nyquist dont l'interprétation était pour le moins confuse. En effet, les ondes sismiques dont on connaît trois espèces, celles de compression, celles de cisaillement et celles de Rayleigh qui se propagent toutes trois à des vitesses fort différentes arrivaient toutes trois pèle-mêle au récepteur en produisant des diagrammes ravissants mais incompréhensibles.

Le but de la présente invention est de pouvoir faire des mesures du signal émis par un vibrateur mécanique et capté par un récepteur sis à une certaine distance de l'émetteur en utilisant une fréquence assez basse pour que les effets de déphasage puissent être négligés.

En limitant la fréquence utilisée à une valeur telle que même les ondes de Rayleigh arrivent au récepteur avec un déphasage suffisamment faible pour que leur amplitude n'en soit pas trop affectée ( ce qui est le cas lorsque le déphasage est inférieur à 30°) on obtiendra une mesure d'amplitude qui sera un reflet simple du module d'élasticité du sous-sol.

A cet effet, comme il est inconcevable d'émettre des ondes mécaniques assez puissantes à basse fréquence par des bobines électriques soumises à un champ magnétique et parcourues par un courant, on émet des ondes mécaniques sinusoïdales par des moyens mécaniques notamment par des masses excentriques tournantes à la façon des vibrateurs servant à enfoncer des palplanches dans le sol.

Le signal électrique sinusoïdal émanant d'un géophone placé à une certaine distance est amplifié sans distorsion et redressé par un commutateur synchrone entraîné par les masses en rotation. Ce commutateur synchrone a pour effet principal d'annuler les signaux parasites. En variant la position angulaire du commutateur synchrone, on pourra compenser les inévitables déphasages parasites dûs au géophone, à l'amplificateur ainsi qu'aux caractéristiques du vibrateur. Il suffira, à cet effet, de chercher une lecture maximum du courant redressé pour une distance émetteur-récepteur minime.

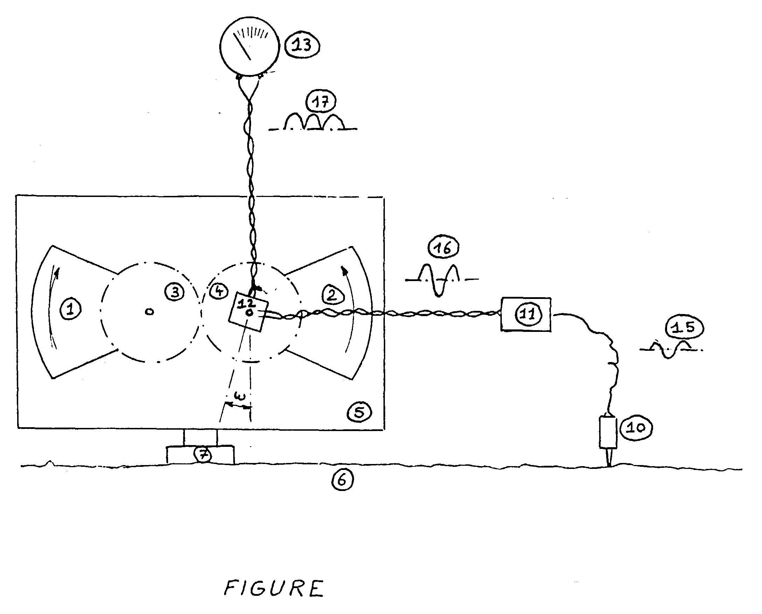

La figure unique adjointe représente une mise en oeuvre du procédé. Soient les masses 1 et 2 couplées par les engrenages 3 et 4 et tournant en sens inverse l'une de l'autre. Elles produisent des accélérations verticales sinusoïdales qui sont transmises au sol 6 par le bâti 5 et le pied 7. La tension sinusoïdale 15 produite par le géophone 10 est amplifiée par l'amplificateur 11. La tension amplifiée 16 sortant de l'amplificateur 11 est redressée par le commutateur synchrone 12. La tension redressée 17 sortant du commutateur synchrone 12 est lue au moyen de l'indicateur 13.

## Revendications

1. Procédé de mesure du module d'élasticité dynamique moyen d'un terrain caractérisé en ce que la fréquence d'émission est assez basse pour pouvoir négliger le déphasage dû aux ondes les plus lentes.

2. Dispositif pour la mesure du module d'élasticité dynamique d'un terrain caractérisé en ce que le générateur de vibration est constitué de deux masses excentriques tournant en sens inverse et munies d'au moins un redresseur synchrone.

3. Dispositif selon la revendication 1 et 2 caractérisé en ce que la position angulaire des redresseurs synchrones peut être adaptée.

4. Dispositif selon les revendications 1 et 2 caractérisé en ce que la distance entre l'émetteur et le récepteur est maintenue fixe, le dispositif étant déplacé sur le terrain.

5. Dispositif selon les revendications 1 et 2 caractérisé en ce que la distance entre l'émetteur et le récepteur est augmentée progressivement à la façon d'un sondage électrique.

6. Dispositif selon les revendication 1 et 2 caractérisé en ce que l'on mesure la tension différentielle produite par deux géophones.

7. Dispositif selon la revendication 1 et 2 caractérisé en ce que le terrain peut être de nature artificielle.

8. Dispositif selon les revendications 1 et 2 caractérisé en ceque la méthode peut être utilisée pour la détection de cavités souterraines.
